# EUROPEAN PATENT APPLICATION

(11) **EP 1 662 487 A1**
(43) Date of publication of application: **31.05.2006**
(21) Application number: 04745643.9
(22) Date of filing: 07.06.2004
(51) Int. Cl.: G11B 5/024

(54) **MAGNETIC DATA ERASE DEVICE AND MAGNETIC DATA ERASE METHOD**

(30) Priority: 29.08.2003 JP 2003307606
(71) Applicant: Orient Instrument Computer Co., Ltd, Osaka-shi, Osaka 536-0014 (JP)
(72) Inventor: ITO, Tomoaki ORIENT INSTRUMENT COMPUTER CO., LTD., Osaka-shi, Osaka 5360014 (JP)
(74) Representative: Paul, Dieter-Alfred
(86) International application number: PCT/JP2004/007933
(87) International publication number: WO 2005/024797

(57) **Abstract**

A magnetic data eraser adapted to completely degauss a recording medium in a magnetic recording device to erase magnetic data with certainty and a method for erasing magnetic data, and further, a magnetic data eraser also adapted to erase recorded magnetic data on a magnetic recording medium or a hard disk drive incorporated in a computer and a method for erasing magnetic data.

The magnetic data eraser (1, 3, 5) includes a power supply circuit (2) for generating an attenuating alternating voltage whose peak value reduces as time passes, a receptacle (20a, 28a) for accommodating a magnetic recording medium (22a, 32a, 33), and an electric coil (15) for degaussing the magnetic recording medium (22a, 32a, 33), and is adapted to apply the attenuating alternating voltage generated in the power supply circuit (2) to the coil (15) to generate within the receptacle (20a, 28a) an attenuating alternating magnetic field whose peak value of magnetic flux density reduces as time passes.

## Description

### TECHNICAL FIELD

The present invention relates to a magnetic data eraser used for erasing data recorded on a recording medium in a magnetic recording device such as a hard disk drive or a magnetic tape cartridge, and to a method for erasing magnetic data.

### BACKGROUND ART

Even when a hard disk drive incorporated in a computer undergoes formatting (physical formatting and logical formatting) of its magnetic disks by OS (Operation System), only information such as location information (FAT: File Allocation Table) of recorded data are erased and magnetic data recorded on the magnetic disks themselves are not erased. Therefore, when a computer is to be reused or abandoned, for example, in view of protecting the magnetic data from being read out, such security measures as making it impossible to reconstruct the data by means of software such as a data erasing software or mechanically destroying the hard disk drive itself are taken.

However, a data erasing software that makes reconstruction of the data impossible clobbers predetermined data such as random data or "00" over the magnetic disks to avoid reconstruction, resulting in requiring a lot of time to clobber the data. Mechanical destruction of the hard disk drive also takes effort to destroy it and further, makes it possible to reuse the hard disk drive. Still further, some data can be read out from a piece of the destroyed magnetic disks.

Thus, a data eraser for erasing magnetic data in a short period of time without clobbering data or destroying a hard disk drive has been developed. The patent document 1, for example, discloses a recorded data eraser that makes it impossible to reconstruct recorded magnetic data by applying a magnetic field from outside of the hard disk drive to disrupt magnetic data recorded on magnetic disks. According to the recorded data eraser disclosed in the patent document 1, it is only necessary to insert a hard disk drive and to carry out an operation for erasing data, thereby erasing recorded magnetic data in a short period of time. Thus, the hard disk drive, whose data are erased, can be abandoned or reused as installing again in a computer as it is.

Patent Document 1: Japanese Utility Model Registration No. 3088608

However, application of a strong magnetic field to a computer body for a long period of time induces a high voltage within the computer by the applied magnetic field, resulting in damaging devices such as memories, CPUs, liquid crystal displays by the induced high voltage. Therefore, the magnetic data eraser disclosed in the patent document 1 directly applies a magnetic field to a sole hard disk drive removed from a computer to erase its magnetic data so as to avoid the possible harm caused by applying a strong magnetic field to the computer body.

However, computers such as a laptop computer in which a number of members are installed in a thin casing with no space needs a lot of effort or time to remove a built-in hard disk drive. Similarly, a desktop computer also needs a lot of effort or time to remove a hard disk drive incorporated in the heavy and bulk computer body. Therefore, an improvement has been desired to erase magnetic data on a hard disk drive incorporated in a computer more readily.

Further, erasing magnetic data recorded on a device such as a magnetic tape for use in a general-purpose computer other than a hard disk drive also has a similar problem. Specifically, in order to erase magnetic data recorded on a magnetic tape, as well as a hard disk drive, it is general to clobber predetermined data such as random data or "00" over the magnetic tape so as to avoid reconstruction of the data. However, since it takes a lot of time to clobber data, an improvement has been desired to erase magnetic data more readily.

It is therefore a first and principal object of the present invention made in view of such problems and drawbacks to provide an improved magnetic data eraser for a magnetic recording device capable of erasing magnetic data with certainty by a complete degaussing of a recording medium in a magnetic recording device. Further, it is a second object of the present invention to provide an improved magnetic data eraser also capable of erasing recorded magnetic data in a magnetic recording medium or a hard disk drive incorporated in a computer, with the medium or the drive kept therein.

### SUMMARY OF THE INVENTION

It is therefore a solution of the problem described above to provide a magnetic data eraser including a power supply circuit adapted to generate an attenuating alternating voltage whose peak value reduces as time passes, a receptacle adapted to accommodate a magnetic recording medium, and an electric coil for degaussing the magnetic recording medium, being adapted to apply the attenuating alternating voltage generated in the power supply circuit to the coil to generate within the receptacle an attenuating alternating magnetic field whose peak value of magnetic flux density reduces as time passes.

Herein, the magnetic recording medium in the present invention is typified by a hard disk drive. A hard disk drive designates a device incorporating a solid magnetic disk for recording magnetic data. A concept of the magnetic recording medium includes small or large magnetic tapes for use in a general-purpose computer or video tapes used at home.

The attenuating alternating voltage in the present invention designates a voltage whose peak value reduces with reversing its polarity, and the attenuating alternating magnetic field in the present invention designates a magnetic field whose magnetic flux density reduces with alternating magnetic pole at a specified location.

Generally, application of a magnetic field rapidly around a magnetic body magnetizes the magnetic body up to a predetermined strength. The magnetized body is degaussed by being disposed in a magnetic field whose strength is gradually decreased to zero or by being drawn away gradually from a magnetic field. This degaussing characteristic is applied for a device such as a head eraser for use in a tape recorder or a video recorder.

The present invention is adapted to use the degaussing characteristic to degauss.

The receptacle may be any size, but preferably accommodates a computer body incorporating the magnetic recording medium and erases magnetic data on the magnetic recording medium incorporated in the computer body accommodated in the receptacle.

According to the above-mentioned structure, the attenuating alternating magnetic field is applied from the outside of the computer body with a hard disk drive kept within the computer body, thereby degaussing a solid magnetic disk incorporated in the hard disk drive. Obviously, the present invention may degauss the hard disk drive after taking out it from the computer body.

Herein, generally, a main body casing of a desktop computer is often constituted by a metal box having electromagnetic shielding performance so as to intercept unwanted radiation generated in the internal circuit of the computer. A laptop computer having portability also has a main casing constituted by a box made of resin with a shielding coating applied to its inner surface or with a thin metal plate adhered to its inner surface so as to have lightweight properties and electromagnetic shielding performance. Further, a hard disk drive incorporated in a computer body employs a sealed structure using aluminum die cast so as to improve rigidity and to block intrusion of dust.

Therefore, even when a magnetic field is applied to a computer body so as to surround the outside thereof, the main body casing of the computer or the casing of the hard disk drive intercepts the magnetic field, resulting in extremely reducing the magnetic flux density applied to a solid magnetic disk incorporated in the hard disk drive.

On the other hand, application of a strong magnetic field to the computer body increases the density applied to the solid magnetic disk, with the consequence that magnetic data recorded on the solid magnetic disk can be disturbed. However, according with increasing the applied magnetic flux density, it may destroy devices incorporated in the computer such as a memory or an LCD.

More specifically, it is necessary to apply a strong magnetic field to a computer body for a long period of time so as to disturb magnetic data in a solid magnetic disk incorporated in a hard disk drive. However, doing so may induce a high voltage in a wiring inside the computer, a wiring pattern on a printed board, or a wiring pattern on an integrated circuit. Thus, the induced high voltage is applied to semiconductor devices disposed in a memory or a CPU, resulting in possibility of destroying the devices themselves or of electric breakdown. Similarly, the induced high voltage is applied to an LCD of the computer or an integrated circuit disposed in a driving circuit of the LCD, resulting in possibility of destroying them. Consequently, it is impossible to apply a high magnetic field to a computer body for a long period of time.

However, the present aspect does not apply a magnetic field having a high magnetic flux density for a long period of time, but applies an attenuating alternating magnetic field whose peak value of density reduces as time passes to a computer body. Thereby, a magnetic field having high magnetic flux density is applied to a magnetic disk incorporated in a hard disk drive for only a short period of time at the start of application of the magnetic field, but the density reduces as time passes to reach zero. Consequently, it is possible to degauss a magnetic disk itself to erase magnetic data with limiting application of a magnetic field having a high magnetic flux density to inside a computer for a long period of time. More specifically, according to the present aspect, not by applying a strong magnetic field to a magnetic disk for a long period of time to disturb magnetic orientation (to orientate in a particular direction), but by applying an attenuating alternating magnetic field, a magnetic disk itself is degaussed, and whereby magnetic data is erased.

Further, the present aspect applies an attenuating alternating magnetic field, so that its magnetic flux density keeps its strength for extremely short period of time. Thereby, it is possible to protect devices in a computer such as an internal circuit or an LCD from being destroyed because of application of a magnetic field.

It is preferable that the coil is wound around the outer periphery of the receptacle.

Further, it is preferable that the power supply circuit includes a capacitor and a charging circuit for charging the capacitor and is adapted to discharge an electrical charge charged in the capacitor via the coil.

According to the present aspect, as an electrical charge charged in the capacitor is discharged via the coil, an attenuating oscillating electric current flows in the coil by means of a series resonant circuit constituted by the capacitor and the coil. That generates an attenuating alternating magnetic field in the coil. Consequently, according to the above-mentioned principle, inserting of a computer body or a magnetic recording medium within the receptacle degausses a solid magnetic disk of a hard disk drive or the magnetic recording medium to erase recorded magnetic data.

According to the present aspect, the resonant circuit constituted by the capacitor and the coil readily generates an attenuating alternating voltage (electric current), thereby dispensing with a particular structure for generating an attenuating alternating voltage at the power supply circuit, so as to simplify its circuit structure.

It is also preferable that the power supply circuit includes a plurality of capacitors connected in series and a plurality of charging circuits for charging the respective capacitors and is adapted to discharge an electrical charge charged in each of the capacitors via the coil.

According to the present aspect, a voltage applied to the coil is the sum of the voltages charged in each of the capacitors. Thus, even when the voltage charged in each of the capacitors is low, connection of a plurality of capacitors in series applies a high voltage to the coil. Thereby, a charging voltage of each of the charging circuit can be set low, so as to use a general-purpose capacitors having a low withstand voltage. That simplifies the circuitry with reducing the cost of components.

It is also possible to employ such a structure as having a plurality of coils wound around discrete parts of the outer periphery of the receptacle and being adapted to sequentially generate an attenuating alternating magnetic field within the receptacle corresponding to the parts around which the coils are wound by sequentially applying a voltage applied from the power supply circuit to each of the coils.

The present aspect does not simultaneously generate a magnetic field having a predetermined magnetic flux density uniformly in the whole inside of the receptacle, but sequentially generates an attenuating alternating magnetic field having a predetermined magnetic flux density with respect to each part around which each coil is wound by sequentially applying a voltage applied from the power supply circuit to each of the coils. Thereby, the voltage and electric current applied to one coil is reduced, compared to simultaneous generation of a magnetic field having a predetermined magnetic flux density within the receptacle. Consequently, even when the receptacle is large in volume, an output voltage (or output electric current) required for the power supply circuit is reduced, thereby ensuring simplification of designing and the use of general components for reduction of cost.

Further, if and when the magnetic data eraser of the present invention is used for degaussing magnetic tapes or video tapes used at home, it is preferable that the electric coil is a single coil wound around the outer periphery of the receptacle and is adapted to generate a magnetic field having a maximum field strength within a range of 199000 A/m (2500 oersted) to 279000 A/m (3500 oersted).

The inventor repeated several experiments so as to determine strength of a magnetic field enough to erase magnetic data recorded in a magnetic recording medium. As a result, in the case of erasing magnetic data recorded in a medium such as a magnetic tape for use in a multi-purpose computer or a video tape used at home, it has revealed that a maximum field strength of a magnetic field generated by the coil is preferably within a range of 199000 A/m (2500 oersted) to 279000 A/m (3500 oersted).

In the case of a maximum field strength of a magnetic field below 199000 A/m (2500 oersted), a magnetic flux density applied to a magnetic recording medium is too low to sufficiently exert an erasability of magnetic data. In the case of the maximum field strength over 279000 A/m (3500 oersted), a needless excessive magnetic field is generated, resulting in diseconomy because of increase of the power supply circuit in volume. The magnetic field generated by the coil preferably has a maximum field strength within 199000 to 279000 A/m (2500 to 3500 oersted), and most preferably about 239000 A/m (3000 oersted).

Further, if and when a computer body itself is put under the eraser of the present invention to degauss an incorporated recording medium, it is preferable that at least one coil is wound around the outer periphery of the receptacle, and the receptacle is adapted to accommodate a computer body or a magnetic recording medium of large size, one of the at least one coil is adapted to generate a magnetic field having a maximum field strength within a range of 358000 A/m (4500 oersted) to 438000 A/m (5500 oersted).

The inventor repeated several experiments so as to determine strength of a magnetic field enough to erase magnetic data recorded in a hard disk drive or a large magnetic recording medium incorporated in a computer body. As a result, in the case of erasing magnetic data recorded in media such as a hard disk drive incorporated in a device such as a desktop computer or a laptop computer, or a large magnetic tape for use in a multi-purpose computer, it has revealed that a maximum field strength of a magnetic field generated by the coil is preferably within a range of 358000 to 438000 A/m (4500 to 5500 oersted).

In the case of a maximum field strength of a magnetic field below 358000 A/m (4500 oersted), a magnetic flux density applied to a magnetic disk of a hard disk drive incorporated in a computer body is too low to sufficiently erase magnetic data. Similarly, in the case of the strength below 358000 A/m (4500 oersted), the magnetic flux density applied to a large magnetic tape too low to sufficiently exert an erasability of magnetic data. In the case of the maximum field strength over 438000 A/m (5500 oersted), a needless excessive magnetic field is generated, consequently being liable to cause harm such as damage because of increase of a magnetic flux density applied to a device incorporated in a computer such as a memory, a CPU, or a LCD. It is also diseconomy because of increase of the power supply circuit in volume. Consequently, the magnetic field generated by the coil preferably has a maximum field strength within 358000 to 438000 A/m (4500 to 5500 oersted), and most preferably about 398000 A/m (5000 oersted).

The eraser of the present aspect preferably employs such a structure that the coil is covered by a material such as a magnetic shield therearound so as to distribute a magnetic field by the coil within the receptacle. However, doing so induces a magnetic filed in the magnetic shield by a magnetic field generated in the coil, thereby generating a mechanical force originating from a repulsive or attractive force between the coil and the shield usually in the same direction. Thus, the coil is liable to be displaced relative to the receptacle.

Therefore, the power supply circuit preferably has a polarity reversing switch for reversal of voltage polarity applied to the coil.

According to the present aspect, operation of the polarity reversing switch reverses magnetic polarity generated in the coil. That changes the mechanical force acting between the coil and the shield in a reverse direction. Consequently, for example, operation of the polarity reversing switch every time of data erasing alternates the mechanical force acting on the coil, thereby minimizing displacement of the coil relative to the receptacle.

Another aspect in order to solve the similar problems is to provide a magnetic data eraser including a capacitor to which a predetermined DC voltage is applicable, an electric coil for generating a magnetic field and connected to the capacitor in parallel, and a switching device interposed between the capacitor and the coil, being adapted to erase magnetic data by means of a magnetic field generated by the coil by controlling the switching device to discharge an electrical charge charged in the capacitor, wherein the coil has an inductance and an internal resistance and the capacitor has an applied voltage, each being set at a predetermined value so that the discharge of the capacitor into the coil generates a rebound phenomenon at least once, whereby a direction of the magnetic field is reversed by a reversed electrical current flowing in the coil with a change in polarity of transient voltage.

According to the present aspect, turning on the switching device during application of a predetermined DC voltage to the capacitor discharge an electrical charge in the capacitor, the discharge generating a magnetic field in the coil to exert a magnetic force on a magnetic recording device placed in the magnetic field.

At this time, the inductance and the internal resistance of the coil and the voltage applied to the capacitor each are set at a predetermined value so as to generate a rebound phenomenon at least once, whereby a direction of the magnetic field is reversed by a reversed electrical current flowing in the coil with a change in polarity of a transient voltage of the discharge of the capacitor into the coil. Therefore, a magnetic field in a reversed direction is generated from the coil in response to the rebound phenomenon after generation of a unidirectional magnetic field by the first discharge, these magnetic fields acting on a magnetic recording device. Consequently, a recording medium of the magnetic recording device is unmagnetized and is degaussed completely or almost completely, so as to improve an erasability of data.

Further, it is preferable that the coil has an inductance of 100 H or more but not more than 200 H and an internal resistance of 2.5 Ω or more but not more than 5 Ω, and that the capacitor has a capacity of 4700 µF (microfarad) or more but not more than 9400 µF (microfarad). Setting of each element within this range generates the rebound phenomenon at least once.

The eraser can further include a box-shaped casing made of a magnetic material and adapted to accommodate the coil therewithin. With the box-shaped casing, a magnetic flux density within the coil by a magnetic field generated in the coil is increased and uniformed. Herein, a magnetic material includes iron or nickel.

Still further, the coil preferably has a wire diameter of 1.2 mm or more.

Still another aspect in order to solve the similar problems is to provide a method for erasing recorded magnetic data including step of applying an attenuating alternating magnetic field to a computer body incorporating a magnetic recording medium so that the magnetic field surrounds the computer body, with the peak value of magnetic flux density of the magnetic field reducing as time passes, so as to degauss the magnetic recording medium.

The method of erasing of the present aspect applies an attenuating alternating magnetic field so as to erase magnetic data of a magnetic recording medium incorporated in a computer, thereby ensuring that devices such as a memory, a CPU, a LCD, and an integrated circuit except the magnetic recording medium are not damaged.

Yet another aspect is to provide a method for erasing magnetic data including steps of providing a capacitor to which a predetermined DC voltage is applicable, providing an electric coil for generating a magnetic field, connecting the capacitor with the coil in parallel, interposing a switching device between the capacitor and the coil, and controlling the switching device so as to discharge an electrical charge charged in the capacitor into the coil for generating a magnetic field, wherein the discharge of the capacitor into the coil generates a rebound phenomenon at least once, whereby a direction of the magnetic field is reversed by a reversed electrical current flowing in the coil with a change in polarity of transient voltage.

The eraser of the present aspect generates a rebound phenomenon to erase magnetic data of a magnetic recording medium, thereby achieving a high erasability of data.

### ADVANTAGEOUS EFFECT OF THE INVENTION

The magnetic data eraser of the present invention applies not an excessive magnetic field to a device for a long period of time, but an attenuating alternating magnetic field, thereby protecting its internal circuit from being damaged. Thereby, it is ensured that a computer or a magnetic recording medium is reused or abandoned maintaining security management.

Further, the magnetic data eraser of the present invention ensures to erase magnetic data recorded in a hard disk drive for short period of time without taking apart a computer body.

### BRIEF DESCRIPTION OF THE DRAWINGS

Fig. 1 is an equivalent circuit diagram of a magnetic data eraser embodying the present invention;
Fig. 2 is a schematic diagram showing an electrical current flowing in an electric coil for degaussing during degaussing in the magnetic data eraser shown in Fig. 1;
Fig. 3 is an equivalent circuit diagram of a specific embodiment of a magnetic data eraser of the present invention;
Fig. 4 is an exploded perspective view showing an internal structure of the magnetic data eraser shown in the equivalent circuit diagram of Fig. 3;
Fig. 5 is a perspective view showing a state of erasing operation with the use of the magnetic data eraser shown in Fig. 4;
Fig. 6 is an exploded perspective view showing an internal structure of the other magnetic data eraser shown in the equivalent circuit diagram of Fig. 3;
Fig. 7 is a perspective view showing a state of erasing operation with the use of the magnetic data eraser shown in Fig. 6;
Fig. 8 is an equivalent circuit diagram of the third embodiment of a magnetic data eraser of the present invention;
Fig. 9 is an equivalent circuit diagram of the fourth embodiment of a magnetic data eraser of the present invention;
Fig. 10 is a schematic diagram showing fluctuation of a transient voltage during discharging in the fifth embodiment of a magnetic data eraser of the present invention;
Fig. 11 is a schematic diagram showing fluctuation of a transient voltage during discharging in the sixth embodiment of a magnetic data eraser of the present invention;
Fig. 12 is a schematic diagram showing fluctuation of a transient voltage during discharging in the seventh embodiment of a magnetic data eraser of the present invention;
Fig. 13 is a schematic diagram showing fluctuation of a transient voltage during discharging in the eighth embodiment of a magnetic data eraser of the present invention; and
Fig. 14 is a schematic diagram showing fluctuation of a transient voltage during discharging in the ninth embodiment of a magnetic data eraser of the present invention.

### DESCRIPTION OF THE PREFERRED EMBODIMENTS

Now, preferred embodiments of the present invention will be described below, making reference to the accompanying drawings. Herein, in the description of the embodiments, a principle of operation of a magnetic data eraser of the invention will be described prior to specific embodiments.

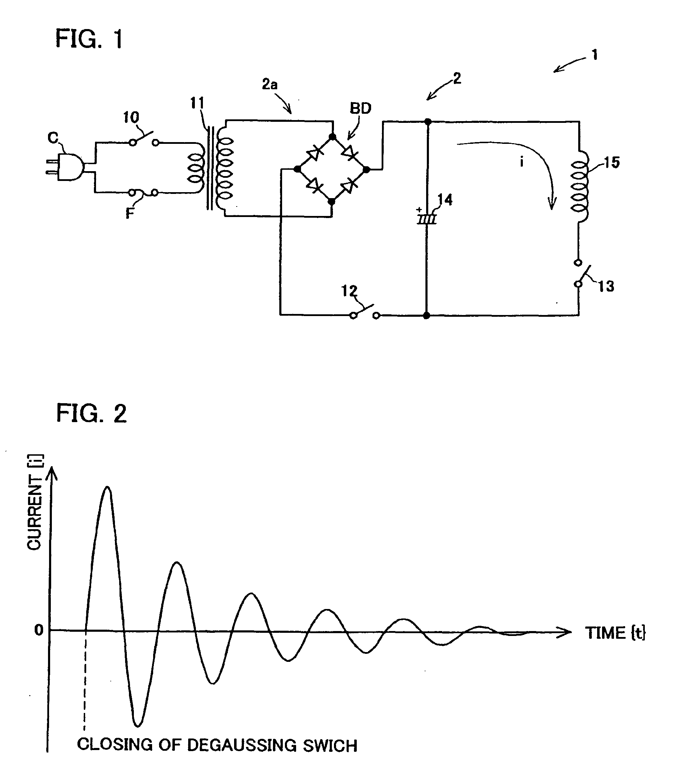

Fig. 1 is a basic circuit diagram showing a principle of operation of a magnetic data eraser of the invention, and Fig. 2 is a schematic diagram showing an electrical current flowing in an electric coil for degaussing.

Referring to Fig. 1, a magnetic data eraser 1 in the present embodiment mainly consists of a power supply circuit 2 and an electric coil for degaussing 15, and applies a voltage (electrical charge) generated in the power supply circuit 2 to the coil 15, thereby generating an attenuating alternating magnetic field.

The power supply circuit 2 includes a power transformer 11, a charging switch 12, a bridge diode BD, and a capacitor 14. The power transformer 11, the bridge diode BD, and the charging switch 12 constitute a charging circuit 2a for charging the capacitor 14.

A primary winding of the power transformer 11 is connected to an AC plug C via a power switch 10 and a fuse F. The power transformer 11 increases a commercial AC voltage (AC100V) applied via the AC plug C so as to output to a secondary wiring. The secondary wiring of the power transformer 11 is connected to the capacitor 14 via the bridge diode BD and the charging switch 12. Upon closing of the power switch 10 and the charging switch 12, the bridge diode BD performs full-wave rectification on a secondary voltage of the power transformer 11, and then the capacitor 14 is charged toward the peak value of the full-wave rectified voltage. In the present embodiment, a polar electrolytic capacitor is employed as the capacitor.

Further, in the present embodiment, a degaussing switch 13 for applying an electrical charge charged in the capacitor 14 to the coil 15 is connected in series with the coil 15.

The magnetic data eraser 1 having this structure generates an attenuating alternating magnetic field by an operation described below. First, the degaussing switch 13 is opened and the power switch 10 and the charging switch 12 are closed to charge the capacitor 14. The capacitor 14 is charged until its charged voltage reaches the peak value of the full-wave rectified voltage by the bridge diode BD. Time required for charging is determined based on the capacity of the capacitor 14 and the secondary wiring resistance of the power transformer 11.

After completion of charging of the capacitor 14, the charging switch 12 is opened. At this moment, the capacitor 14 is fully charged, so that its terminal voltage is increased up to a voltage substantially equal to the peak value of the full-wave rectified voltage by the bridge diode BD.

Next, when the degaussing switch 13 is closed, an electrical charge charged in the capacitor 14 is rapidly discharged via the coil 15. Herein, as the capacitor 14 and the coil 15 are connected in series to form a series resonant circuit, closing of the degaussing switch 13 makes an electrical current "i" flowing in the coil 15 an attenuating alternating current whose peak value reduces as time passes, as shown in Fig. 2.

A cycle time of the attenuating alternating current "i" flowing in the coil 15 is generally determined based on the capacity of the capacitor 14 and an inductance of the coil 15. An attenuation rate of the attenuating alternating current "i" is determined based on an internal resistance of the capacitor 14 and a resistance component of the coil 15. Specifically, when the degaussing switch 13 is closed, the attenuating alternating current "i" having the cycle time and the attenuation rate determined based on the series resonant circuit composed of the capacitor 14 and the coil 15 is applied to the coil 15, and the applied current is attenuated with reversal of polarity, leading to zero.

Consequently, closing of the degaussing switch 13 generates around the coil 15 the attenuating alternating magnetic field whose magnetic flux density gradually reduces with alternating of magnetic pole as time passes. The magnetic data eraser 1 of the present invention is adapted to generate an attenuating alternating magnetic field based on this principle and to apply the generated attenuating alternating magnetic field to a magnetic recording medium or a computer body, so as to erase magnetic data recorded thereon. More specifically, the magnetic data eraser 1 of the present invention does not generate a strong magnetic field for a long period of time, but generates an attenuating alternating magnetic field whose magnetic flux density reduces as time passes.

The principle of operation of the magnetic data eraser relating to the present invention is described above, and now, preferred embodiments of the magnetic data eraser of the present invention are described in detail below, making reference to the accompanying drawings.

### [FIRST EMBODIMENT]

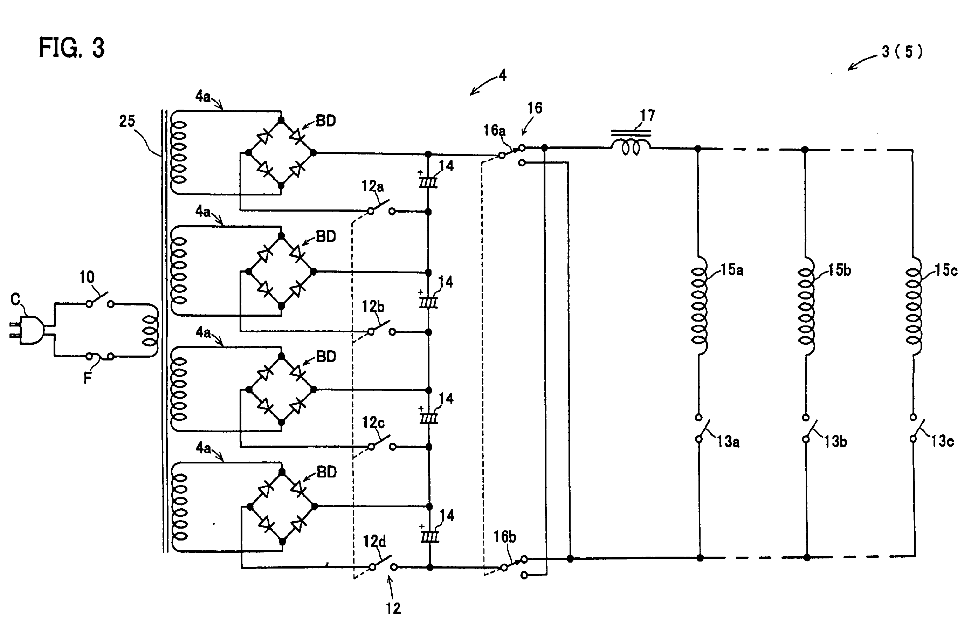

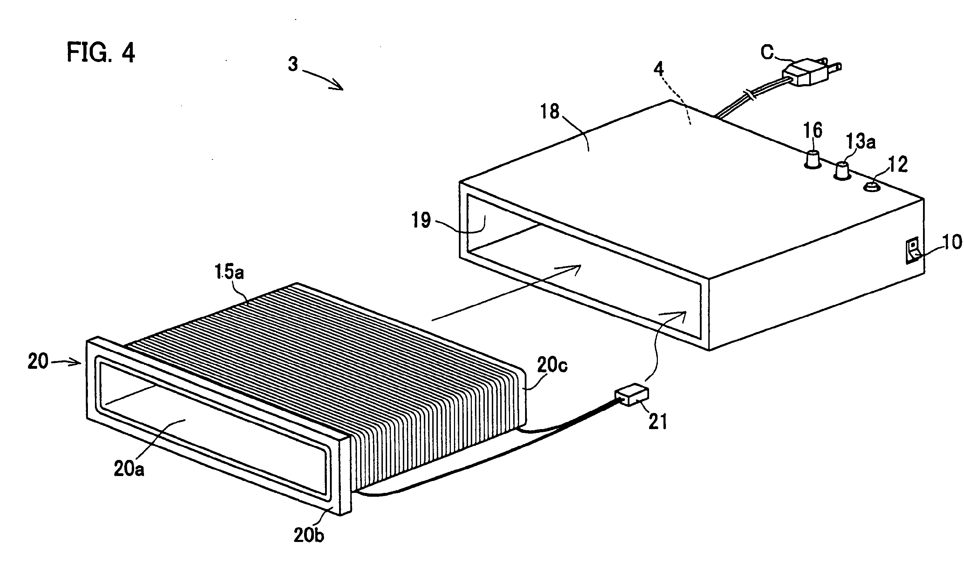

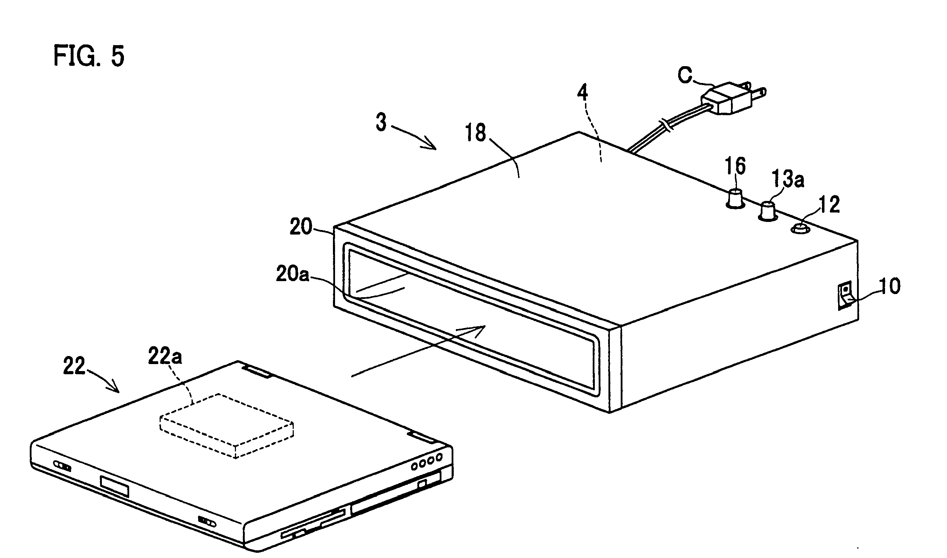

Fig. 3 is an equivalent circuit diagram of a magnetic data eraser 3 of the first embodiment, Fig. 4 is an exploded perspective view showing an internal structure of the eraser 3, and Fig. 5 is a perspective view showing a state of erasing operation with the use of the eraser 3. Herein, as the eraser 3 shown in Fig. 3 basically has the same circuit structure as that of the eraser 1 shown in Fig. 1, duplicate descriptions are omitted for simplicity, giving the same numeral to the same component. Further, the equivalent circuit diagram of Fig. 3 shows a structure provided with three coils 15a to 15c, but the eraser 3 of the first embodiment illustrates a structure provided with only one coil 15a.

The eraser 3 of the first embodiment, as shown in Fig. 3, mainly consists of a power supply circuit 4 and a coil 15a for degaussing. The power supply circuit 4 includes a power transformer 25, a charging switch 12, four bridge diodes BD, four capacitors 14 connected in series, and a polarity reversing switch 16. The power transformer 25, the four bridge diodes BD, and the charging switch 12 constitute four units of charging circuits 4a for charging the respective capacitors 14.

A primary winding of the power transformer 25 is connected to an AC plug C via a power switch 10 and a fuse F, and increases a commercial AC voltage (AC100V) applied via the AC plug C so as to output to secondary wirings. The secondary side of the power transformer 25 has four secondary wirings, each outputting the same increased voltage. A quadrupolar single-throw switch having four single-throw switches 12a to 12d working in conjunction with one another is employed as the charging switch 12.

The secondary wirings of the power transformer 25 are respectively connected to the capacitors 14 via the four bridge diodes BD and the charging switch 12 (12a to 12d). Upon closing of the charging switch 12, each of the bridge diodes BD performs full-wave rectification on a secondary voltage of the power transformer 25, and then each of the capacitors 14 is charged toward the peak value of the full-wave rectified voltage.

A bipolar double-throw switch having two double-throw switches 16a and 16b working in conjunction with each other is employed as the polarity reversing switch 16. A moving contact of the double-throw switch 16a is connected to a positive end of the whole capacitors 14 connected in series, and a moving contact of the double-throw switch 16b is connected to a negative end of the whole capacitors 14 connected in series. A normally-closed contact of the switch 16a and a normally-opened contact of the switch 16b are connected to one end of the coil 15 via a reactor 17, and a normally-opened contact of the switch 16a and a normally-closed contact of the switch 16b are connected to the other end of the coil 15 via the degaussing switch 13a. Operation of the polarity reversing switch 16 is adapted to reverse a connection of the capacitors 14 connected in series and the coil 15. Herein, the reactor 17 connected in series with the coil 15 has a function of aiming at a stabilization of electric current applied to the coil 15.

According to the eraser 3 of the first embodiment having this circuit structure, upon closing of the charging switch 12, each of the capacitors 14 is charged until its charged voltage reaches the peak value of the full-wave rectified voltage by the bridge diode BD, so that a voltage level fourth of the voltage charged in each of the capacitors 14 is obtained from the both ends of the capacitors 14 connected in series.

The eraser 3 of the first embodiment, as shown in Fig. 4, has a frame 20 for winding a coil therearound and incorporated in a main body casing 18.

The casing 18 has a tubular shape having a rectangular cross section with its height shorter than its width and is made of a synthetic resin material. Further, the inner surface of the casing 18 is entirely covered with a lamellar magnetic shield 19 made of a nonmagnetic material such as aluminum.

The casing 18 incorporates each member of the power supply circuit 4 in the innermost of the casing, from which the AC plug C is pulled out backward. Further, the casing 18 has the power switch 10 arranged at its right side and buttons of the charging switch 12, the degaussing switch 13a, and the polarity reversing switch 16 at its top face.

Referring to Fig. 4, the charging switch 12 and the degaussing switch 13a each are an alternate-type push switch, both switches mechanically working in conjunction with each other. Specifically, pushing in the button of the charging switch 12 to close the switch is adapted to make the degaussing switch 13a to be opened and the button to be protruded by its ganged operation, whereas pushing in the button of the degaussing switch 13a is adapted to make the charging switch 12 to be opened and the button to be protruded by its ganged operation.

Further, the polarity reversing switch 16 is also an alternate-type push switch, and thus, is connected to the normally-opened contact upon pushing in the button and to the normally-closed contact upon another pushing in the button to be protruded.

The coil winding frame 20 has a frame body 20c having a tubular shape with a substantially rectangular cross section with its height shorter than its width and , provided with a flange 20b at its front end, the interior portion of the frame body 20c functioning as a receptacle 20a for accommodating a device such as a computer therein described below. The frame 20 is made of a synthetic resin material and the frame body 20c is of a size enough to fit completely inside the casing 18.

The coil 15a is wound around the outer periphery of the frame body 20c from the front part to the rear part thereof, the both ends of the coil 15a being pulled out backward to have a connector 21 attached thereto. In the first embodiment, the coil 15a uses an enamel wire and is secured to the frame body 20c by means of an insulating adhesive agent applied to the wound part.

In assembly, the frame 20 is inserted into the casing 18 as the coil 15a is wound therearound. Specifically, the frame body 20c and the connector 21 are inserted into the casing 18 and the flange 20b is brought into contact with the open end of the casing 18 to be secured to the casing 18. The connector 21 is connected to a connector (not shown) disposed inside the casing 18, thereby completing its assembly.

The assembled eraser 3, as shown in Fig. 5, is formed of the receptacle 20a accommodated in the casing 18, the receptacle 20a being capable of accommodating a laptop computer 22.

Now, operating procedures for erasing magnetic data by the use of the magnetic data eraser 3 of the first embodiment will be described below. Referring to Fig. 5, the power switch 10 is turned on and the button of the charging switch 12 is pushed in so as to close the charging switch 12 for a predetermined period of time. At this time, in conjunction with the closing of the charging switch 12, the degaussing switch 13a is opened. Thereby, as shown in Fig. 3, each of the capacitors 14 is charged to increase its terminal voltage up to substantially 400 V.

Then, as shown in Fig. 5, the laptop computer 22 incorporating a hard disk drive 22a is inserted into the receptacle 20a, whereupon the button of the degaussing switch 13a is pushed in to close the degaussing switch 13a. At this moment, in conjunction with the closing of the degaussing switch 13a, the charging switch 12 is opened. Thereby, as shown in Fig. 3, an electrical charge charged in the capacitors 14 are discharged via the coil 15a, and the attenuating alternating current shown in Fig. 2 is applied to the coil 15a. Consequently, an attenuating alternating magnetic field based on the applied current is generated inside the receptacle 20a, so that the computer 22 accommodated in the receptacle 20a is exposed to the generated attenuating alternating magnetic field.

The attenuating alternating magnetic field applied to the computer 22 has extremely high magnetic flux density at the start of discharging, but the density reduces as time passes. Thus, the hard disk drive 22a incorporated in the computer 22 also receives the magnetic field having high magnetic flux density and thereafter, the density reduces as time passes, with the consequence that the magnetic disk incorporated in the hard disk drive 22a is degaussed to erase recorded magnetic data thereon.

Herein, the eraser 3 of the first embodiment, as described above, employs such a structure that the magnetic shield 19 for reducing leaks of magnetic flux covers inside the casing 18. Therefore, every time of erasing operation; that is, every time the coil 15a is energized, a mechanical force acts between the magnetic shield 19 and the coil 15a, resulting in possibility of relative displacement of the coil 15a in one direction. However, alternate switching connection of the polarity reversing switch 16 disposed at the eraser 3 every time of erasing operation reverses the polarity of the current applied to the coil 15a. Consequently, the direction of the mechanical force acted between the magnetic shield 19 and the coil 15a is reversed every time of erasing operation, so as to effectively prevent the displacement of the coil 15a relative to the frame body 20c.

The inventor in this application experimentally produced the magnetic data eraser 3 of the first embodiment having the above-mentioned structure with constants of the circuit components and sizes of the structural members set as follows:

The power transformer 25 had a primary rated voltage of AC 100 V and a secondary rated voltage of AC 280 V. The circuit was constructed from four groups of capacitors 14 connected in series, each group having six capacitors connected in parallel, each capacitor having a capacity of 6800 µF (microfarad) and a withstand voltage of at least 400 V. More specifically, each of the groups of capacitors 14 had a capacity of 40800 µF (microfarad) and a withstand voltage of at least 400 V and the four groups of capacitors 14 are connected in series in the circuit. The receptacle 20a had a width of 320 mm, a height of 65 mm, and a depth of 400 mm.

By the eraser 3, closing of the charging switch 12 for about three minutes charged each of the capacitors 14 up to about 400 V, thereby obtaining about 1600 V between the both ends of the four groups of capacitors 14 connected in series. After charging of the capacitors 14, the degaussing switch 13a was closed to apply the voltage (electrical charge) charged in the capacitors 14 to the coil 15a, whereupon a magnetic field having a maximum field strength of 398000 A/m (5000 oersted) in the receptacle 20a was observed. An attenuating alternating magnetic field generated in the receptacle 20a had a cycle of about 5 Hz.

By the use of the eraser 3, an erasing operation of the hard disk drive 22a incorporated in the laptop computer 22 was performed by the procedures described above. Direct observation of the surface of a magnetic disk incorporated in the hard disk drive 22a by an electron microscope revealed that magnetic recording data were erased and that the computer 22 in which the erasing operation had been carried out was reusable.

In this way, the magnetic data eraser 3 of the first embodiment erases magnetic data in the hard disk drive 22a for a short period of time and efficiently by accommodating the laptop computer 22 therein. That eliminates the need for taking out the hard disk drive 22a in erasing magnetic data, thereby considerably improving workability and securing a reliable security management for disposal and reuse. Further, erasing is performed by application of not a magnetic field having a high magnetic flux density for a long period of time, but of an attenuating alternating magnetic field, not destroying devices incorporated in a computer such as a memory, a CPU, or an LCD, thereby gaining a reputation for very high reliability.

Herein, the eraser 3 of the first embodiment erases data in the hard disk drive 22a incorporated in the thin laptop computer 22, but the present invention can take a construction accepting devices such as a desktop computer or a large magnetic tape. A magnetic data eraser in the second embodiment capable of accommodating devices such as a desktop computer will be described below.

### [SECOND EMBODIMENT]

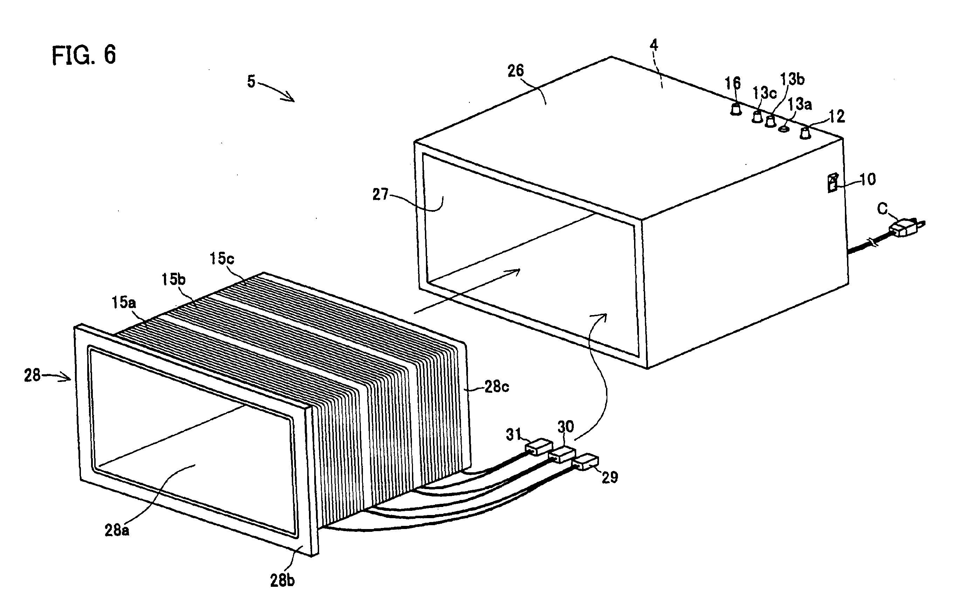

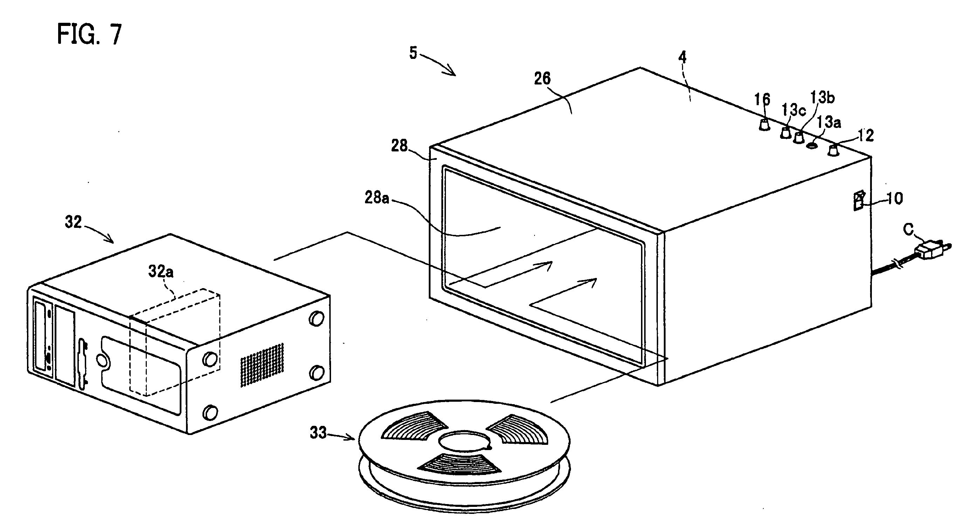

Fig. 6 is an exploded perspective view showing an internal structure of a magnetic data eraser 5 of the second embodiment, and Fig. 7 is a perspective view showing a state of erasing operation with the use of the magnetic data eraser 5. The eraser 5 of the second embodiment has basically the same equivalent circuit as that of the first embodiment, and thus, duplicate descriptions are omitted for simplicity, giving the same numeral to the same component.

The first embodiment, as shown in Fig. 3, has only one coil 15a, whereas the second embodiment has a structure having three electric coils 15a to 15c connected in parallel in response to enlargement of an object whose data is to be erased (see Fig.3). Further, the coils 15a to 15c have degaussing switches 13a to 13c connected respectively thereto in series.

The eraser 5 of the second embodiment, as shown in Fig. 6, has a frame 28 for winding a coil therearound and incorporated in a main body casing 26. The casing 26 has a tubular shape with a rectangular cross section with a width, a height, and a depth enlarged compared to the casing 18 (see Fig.4) employed in the first embodiment and is made of a synthetic resin material. Further, the inner surface of the casing 26 is entirely covered with a lamellar magnetic shield 27.

The casing 26 accommodates each member of the power supply circuit 4 in the innermost of the casing, from which the AC plug C is pulled out backward. Further, the casing 26 has the power switch 10 arranged at its right side and buttons of the charging switch 12, the degaussing switches 13 (13a to 13c), and the polarity reversing switch 16 at its top face.

Referring to Fig. 4, the charging switch 12 and the degaussing switches 13a to 13c each are an alternate-type push switch, both switches mechanically working in conjunction with each other. Specifically, pushing in the button of one selected from the charging switch 12 and the degaussing switches 13a to 13c to close the corresponding switch is adapted to make the other switches to be opened by its ganged operation. The polarity reversing switch 16 has the same structure as that of the first embodiment.

The coil winding frame 28 has a frame body 28c having a tubular shape with a substantially rectangular cross section with a width, a height, and a depth enlarged compared to the frame 20 (see Fig. 4) employed in the first embodiment, provided with a flange 28b at its front end. The frame 28 is made of a synthetic resin material. The interior portion of the frame body 28c functions as a receptacle 28a for accommodating a device such as a desktop computer or a large magnetic tape therein described below. The frame body 28c is of a size enough to fit completely inside the casing 26.

The coils 15a to 15c are wound around discrete parts of the outer periphery of the frame body 28c in order, from the front part to the rear part thereof, the both ends of each coils 15a to 15c being pulled out backward to respectively have connectors 29 to 31 attached thereto. As well as the first embodiment, the coils 15a to 15c each use an enamel wire and are secured to the frame body 28c by means of an insulating adhesive agent applied to the wound part.

In assembly, the frame 28 is inserted into the casing 26 as the coils 15a to 15c are wound therearound. Specifically, the frame body 28c and the connectors 29 to 31 are inserted into the casing 26 and the flange 28b is brought into contact with the open end of the casing 26 to be secured to the casing 26. The connectors 29 to 31 are connected to connectors (not shown) disposed inside the casing 26 respectively, thereby completing its assembly.

The assembled eraser 5, as shown in Fig. 7, is formed of the receptacle 28a accommodated in the casing 26, the receptacle 28a being capable of accommodating a device such as a desktop computer 32 or a large magnetic tape 33.

Now, operating procedures for erasing magnetic data by the use of the magnetic data eraser 5 of the second embodiment will be described below. Referring to Fig. 6, the power switch 10 is turned on and the button of the charging switch 12 is pushed in so as to close the charging switch 12 for a predetermined period of time. At this time, in conjunction with the closing of the charging switch 12, the degaussing switches 13 (13a to 13c) are all opened. Thereby, as shown in Fig. 3, each of the capacitors 14 is charged to increase its terminal voltage up to substantially 400 V.

Then, as shown in Fig. 7, the desktop computer 32 incorporating a hard disk drive 32a is inserted into the receptacle 28a, whereupon the button of the degaussing switch 13a is pushed in to close the degaussing switch 13a. At this moment, in conjunction with the closing of the degaussing switch 13a, the charging switch 12 is opened. Thereby, as shown in Fig. 3, an electrical charge charged in the capacitors 14 are discharged via the coil 15a, and the attenuating alternating current shown in Fig. 2 is applied to the coil 15a. Consequently, an attenuating alternating magnetic field based on the applied current is generated at the front part of the receptacle 28a, so that the front part of the computer 32 accommodated in the receptacle 28a is exposed to the generated attenuating alternating magnetic field.

According to similar procedures, after closing of the charging switch 12 for a predetermined period of time, the degaussing switch 13b is closed to generate an attenuating alternating magnetic field in the coil 15b, whereupon the central part of the computer 32 accommodated in the receptacle 28a is exposed to the attenuating alternating magnetic field. Further, according to similar procedures, after closing of the charging switch 12 for a predetermined period of time, the degaussing switch 13c is closed to generate an attenuating alternating magnetic field in the coil 15c, whereupon the rear part of the computer 32 accommodated in the receptacle 28a is exposed to the attenuating alternating magnetic field. Specifically, the eraser 5 of the second embodiment applies an attenuating alternating magnetic field sequentially to the discrete parts consisting of the front part, the central part, and the rear part of the desktop computer 32 being large in size to erase magnetic data. Further, in the case of a large magnetic tape inserted in the receptacle 28a, the similar procedures are required to erase magnetic data.

The inventor experimentally produced the magnetic data eraser 5 of the second embodiment having the above-mentioned structure with constants of the circuit components and sizes of the structural members set as follows:

The power transformer 25 was the same as that of the first embodiment. The circuit was constructed from four groups of capacitors 14 connected in series, each group having eight capacitors connected in parallel, each capacitor having a capacity of 6800 µF (microfarad) and a withstand voltage of at least 400 V. More specifically, each of the groups of capacitors 14 had a capacity of 54400 µF (microfarad) and the withstand voltage of at least 400 V and the four groups of capacitors 14 are connected in series in the circuit. The receptacle 28a had a width of 460 mm, a height of 240 mm, and a depth of 440 mm.

By the eraser 5, as well as the first embodiment, closing of the charging switch 12 for about three minutes charged each of the capacitors 14 up to about 400 V, thereby obtaining about 1600 V between the both ends of the four groups of capacitors 14 connected in series. After charging of the capacitors 14, any of the degaussing switches 13a to 13c was closed to apply the voltage (electrical charge) charged in the capacitors 14 to the corresponding coil 15a, 15b, or 15c, whereupon a magnetic field having a maximum field strength of 398000 A/m (5000 oersted) in the receptacle 28a was observed. An attenuating alternating magnetic field generated in the receptacle 28a had a cycle of about 5 Hz.

In this way, the magnetic data eraser 5 of the second embodiment erases magnetic data for a short period of time and efficiently by accommodating the desktop computer 32 or the large magnetic tape 33 entirely therein. That eliminates the need for taking out the hard disk drive 32a in erasing magnetic data, thereby considerably improving workability and securing a reliable security management for disposal and reuse. Further, as well as the first embodiment, erasing is performed by application of an attenuating alternating magnetic field, not destroying devices incorporated in a computer such as a memory, a CPU, or an LCD, thereby gaining a reputation for high reliability.

In addition to the first and the second embodiments, the inventor experimentally produced a magnetic data eraser (the third embodiment) dedicated to a large magnetic tape and a magnetic data eraser (the fourth embodiment) for both a laptop computer and a large magnetic tape. Structures of the third and fourth embodiments will be described below.

### [THIRD EMBODIMENT]

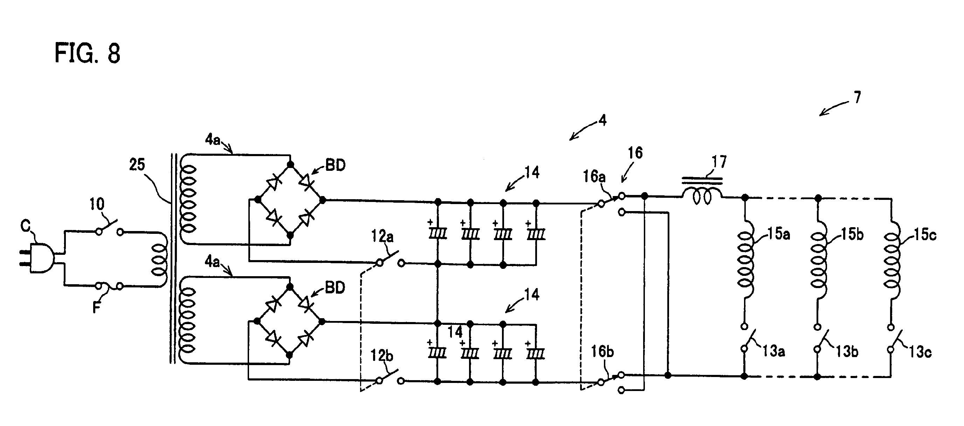

Fig. 8 is an equivalent circuit diagram of a magnetic data eraser 7 of the third embodiment. The eraser 7 of the third embodiment is dedicated to a large magnetic tape, and therefore employs such a structure as reducing a maximum field strength of a generated magnetic field compared to the first embodiment. Specifically, the eraser 7 of the third embodiment has a circuit structure having two groups of charging circuits 4a and two groups of capacitors 14 each group with a reduced capacity in the equivalent circuit shown in Fig. 3 so as to reduce a voltage applied to the coils 15a to 15c (Fig. 8). Other structures are the same as those of the data eraser 3 of the first embodiment (see Figs 3 to 5).

As shown in Fig. 8, in the eraser 7 of the third embodiment, the circuit was constructed from two groups of capacitors 14 connected in series, each group having four capacitors connected in parallel, each capacitor having a capacity of 6800 µF (microfarad) and a withstand voltage of at least 400 V. More specifically, each of the groups of capacitors 14 had a capacity of 27200 µF (microfarad) and a withstand voltage of at least 400 V and the two groups of capacitors 14 are connected in series in the circuit. A receptacle (not shown) had a width of 320 mm, a height of 65 mm, and a depth of 400 mm, as well as the first embodiment.

By the eraser 7 of the third embodiment, a magnetic field having a maximum field strength of 238800 A/m (3000 oersted) in the receptacle was observed. An attenuating alternating magnetic field generated in the receptacle had a cycle of about 5 Hz. Further, it was confirmed that the eraser 7 was able to erase magnetic data in a large magnetic tape with certainty.

### [FOURTH EMBODIMENT]

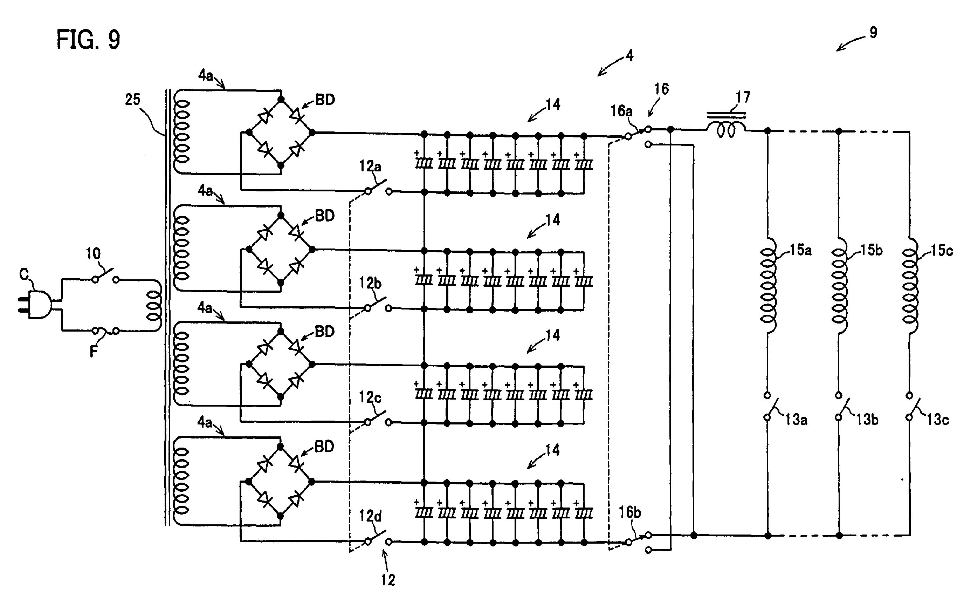

Fig. 9 is an equivalent circuit diagram of a magnetic data eraser 9 of the fourth embodiment. The eraser 9 of the fourth embodiment is dedicated to both a laptop computer and a magnetic tape, and therefore employs such a structure as increasing a capacity of the capacitor 14 compared to the first embodiment (Fig. 9). Specifically, the eraser 9 of the fourth embodiment has the same structure as that of the eraser 3 of the first embodiment (see Figs. 3 to 5) except the group of capacitors 14 whose capacity is increased as compared with the eraser 3 of the first embodiment (see Fig. 3).

As shown in Fig. 9, in the eraser 9 of the fourth embodiment, the circuit was constructed from four groups of capacitors 14 connected in series, each group having eight capacitors connected in parallel, each capacitor having a capacity of 6800 µF (microfarad) and a withstand voltage of at least 400 V. More specifically, each of the groups of capacitors 14 had a capacity of 54400 µF and a withstand voltage of at least 400 V and the four groups of capacitors 14 are connected in series in the circuit. A receptacle (not shown) had a width of 320 mm, a height of 65 mm, and a depth of 400 mm, as well as the first embodiment.

By the eraser 9 of the fourth embodiment, a magnetic field having a maximum field strength of 398000 A/m (5000 oersted) in the receptacle was observed. An attenuating alternating magnetic field generated in the receptacle had a cycle of about 5 Hz. Further, it was confirmed that the eraser 9 was able to erase magnetic data in a large magnetic tape and a laptop computer incorporating a hard disk drive with certainty.

Hereinbefore, the magnetic data erasers of the first to fourth embodiments relating to the present invention were described, but the present invention is not limited thereto and is able to employ various structures with a maximum field strength of a generated magnetic field or the number of the coil appropriately set according to an object whose magnetic data is to be erased.

The preferred embodiments described above are primarily intended to degauss a recording medium incorporated in a computer with putting a computer body entirely in the eraser, but the present invention is not limited thereto and is also able to degauss only a hard disk drive taken out from a computer body with being put in the eraser of the invention.

Now, a preferred embodiment adapted to degauss a hard disk drive taken out from a computer body will be described.

In order to erase write data in a hard disk drive, it is necessary to exert a stronger magnetic force than a written magnetization. From this point of view, the stronger a magnetic field by an electric coil acting on a receptacle, the better. However, in order to certify reuse of devices such as a controlling circuit (not shown) incorporated in the hard disk drive without being destroyed, it is preferable to set a strength of magnetic field having a magnetic flux density within a range of 0.6 to 1.5 tesla (6000 to 15000 gauss). In the case of the density of under 0.6 tesla (6000 gauss), data is not completely erased, whereas in the case of the density of over 1.5 tesla (15000 gauss), the controlling circuit may be destroyed. Thus, the most preferable density is within a range of 0.8 to 1.3 tesla (8000 to 13000 gauss).

Now, embodiments, in which three parameters in a magnetic data eraser; that is, an inductance of a coil, an internal resistance of the coil, and a voltage applied to a capacitor are appropriately modified to set a plurality of conditions, a transient voltage during discharging on each condition to identify a rebound phenomenon, and an erasability of magnetic data on each condition is determined, will be described below. Herein, as magnetic data erasers used in the fifth to ninth embodiments below have basically the same circuit structures as that of the magnetic data eraser 1 shown in Fig. 1, the same numeral is given to the same component.

### [FIFTH EMBODIMENT]

An eraser of the fifth embodiment was set with a diameter of the coil 15 of 1.2 mm or more, its internal resistance of 2.5 Ω, an inductance of the coil 15 of 100 H, a voltage applied to the capacitor 14 of 380 V, and a capacity of the capacitor 14 of 4700 µF (microfarad).

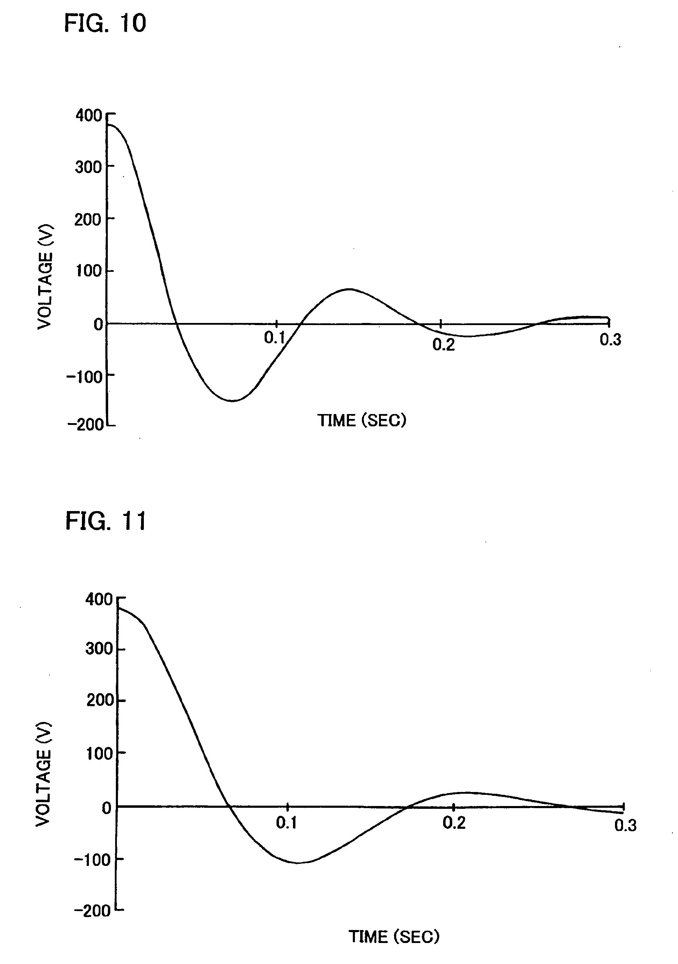

In measuring the transient voltage and time characteristic of the discharge under this condition, as seen in Fig. 10, substantially four times of the rebound phenomena were generated by one discharge. In this case, recorded data on a solid magnetic disk in a hard disk drive was completely erased.

### [SIXTH EMBODIMENT]

An eraser of the sixth embodiment was set with a diameter of the coil 15 of 1.2 mm or more, its internal resistance of 5 Ω, an inductance of the coil 3 of 200 H, a voltage applied to the capacitor 14 of 380V, and a capacity of the capacitor 14 of 4700 µF (microfarad).

In measuring the transient voltage and time characteristic of the discharge under this condition, as seen in Fig. 11, substantially three times of the rebound phenomena were generated by one discharge. Also in this case, recorded data on a solid magnetic disk in a hard disk drive was completely erased.

### [SEVENTH EMBODIMENT]

An eraser of the seventh embodiment was set with a diameter of the coil 15 of 1.2 mm or more, its internal resistance of 5 Ω, an inductance of the coil 15 of 100 H, a voltage applied to the capacitor 14 of 1000 V, and a capacity of the capacitor 14 of 9400 µF (microfarad).

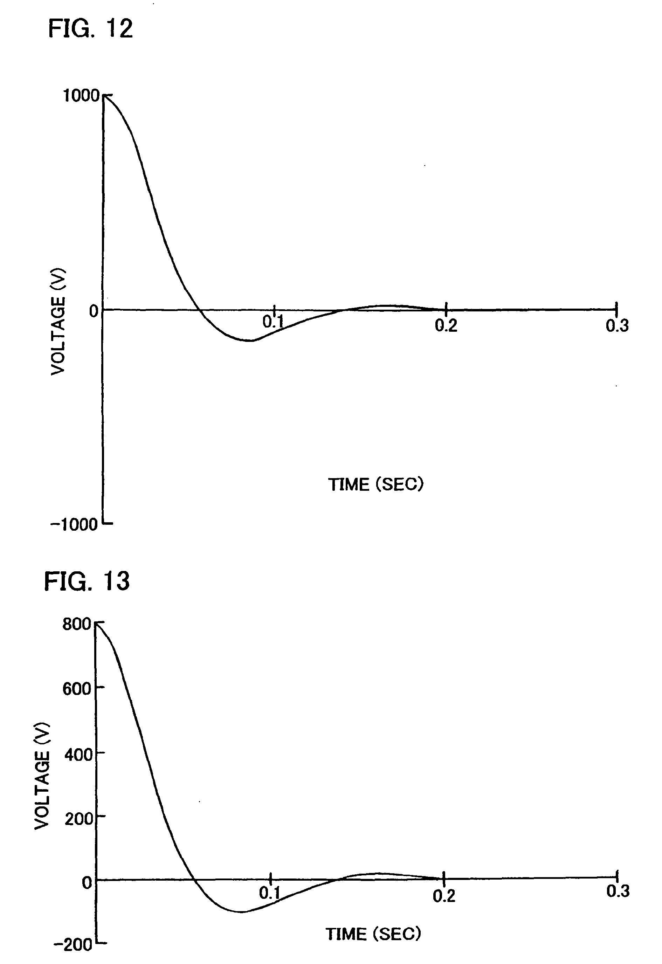

In measuring the transient voltage and time characteristic of the discharge under this condition, as seen in Fig. 12, substantially less than twice of the rebound phenomena were generated by one discharge. Also in this case, recorded data on a solid magnetic disk in a hard disk drive was erased with high accuracy.

### [EIGHTH EMBODIMENT]

An eraser of the eighth embodiment was set with a diameter of the coil 15 of 1.2 mm or more, its internal resistance of 5 Ω, an inductance of the coil 15 of 200 H, a voltage applied between the both sides of the capacitor 14 of 800 V, and a capacity of the capacitor 14 of 9400 µF (microfarad).

In measuring the transient voltage and time characteristic of the discharge under this condition, as seen in Fig. 13, substantially twice of the rebound phenomena were generated by one discharge. Also in this case, recorded data on a solid magnetic disk in a hard disk drive was erased with high accuracy.

### [NINTH EMBODIMENT]

An eraser of the ninth embodiment was set with a diameter of the coil 15 of 1.2 mm or more, its internal resistance of 5 Ω, an inductance of the coil 15 of 100 H, a voltage applied between the both ends of the capacitor 14 of 380 V, and a capacity of the capacitor 14 of 4700 µF (microfarad).

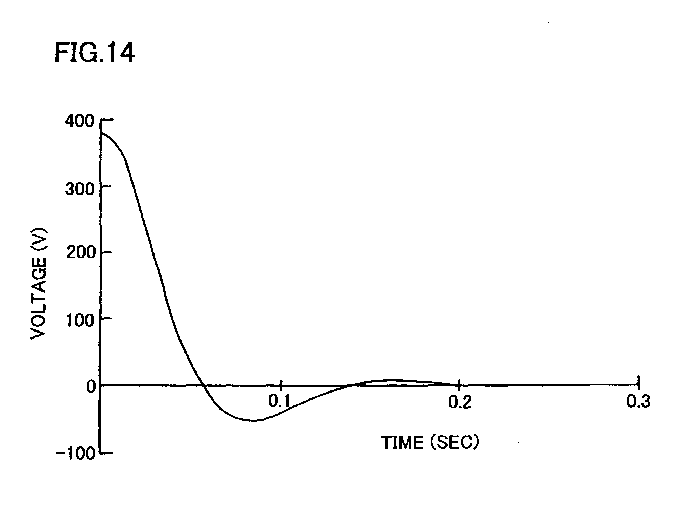

In measuring the transient voltage and time characteristic of the discharge under this condition, as seen in Fig. 14, substantially twice of the rebound phenomena were generated by one discharge. Also in this case, recorded data on a solid magnetic disk in a hard disk drive was erased with high accuracy. As evidenced by the above-mentioned fifth to ninth embodiments, rebound of the transient voltage during discharging erases recorded data well. It was revealed that especially, as in the fifth embodiment, several rebounds were extremely effective in the above-mentioned erasability of data.

The above-mentioned embodiments each employ such a structure that an electrical charge charged in the capacitor 14 is applied to the coil 15 to generate an attenuating alternating magnetic field, but the present invention is not limited thereto and is able to employ such a structure as applying an attenuating alternating voltage generated in the power supply circuit to the coil 15, for example.

Further, the above-mentioned embodiments each employ a structure having both the power switch 10 and the charging switch 12, but the present invention is able to employ a structure dispensing with the charging switch 12 and having the power switch 10 that is turned on and off to charge and stop charging the capacitor 14.

Still further, the above-mentioned embodiments each employ a structure having the charging switch 12 and the degaussing switch 13, but the present invention is not limited thereto and is able to automate an erasing operation by a structure using a CPU, for example. Yet further, instead of the polarity reversing switch 16, it is possible to employ a structure by which a polarity applied to the coil 15 is automatically reversed by means of an internal circuit every time of erasing operation.

## Claims

1. A magnetic data eraser comprising:
a power supply circuit adapted to generate an attenuating alternating voltage whose peak value reduces as time passes;
a receptacle adapted to accommodate a magnetic recording medium; and
an electric coil for degaussing the magnetic recording medium,
being adapted to apply the attenuating alternating voltage generated in the power supply circuit to the coil to generate within the receptacle an attenuating alternating magnetic field whose peak value of magnetic flux density reduces as time passes.

2. The magnetic data eraser as defined in claim 1,
wherein the receptacle is adapted to accommodate a computer body incorporating the magnetic recording medium and to erase magnetic data on the magnetic recording medium incorporated in the computer body accommodated in the receptacle.

3. The magnetic data eraser as defined in claim 1,
wherein the coil is wound around the outer periphery of the receptacle.

4. The magnetic data eraser as defined in claim 1,
wherein the power supply circuit comprises a capacitor and a charging circuit for charging the capacitor and is adapted to discharge an electrical charge charged in the capacitor via the coil.

5. The magnetic data eraser as defined in claim 1,
wherein the power supply circuit comprises a plurality of capacitors connected in series and a plurality of charging circuits for charging the respective capacitors and is adapted to discharge an electrical charge charged in each of the capacitors via the coil.

6. The magnetic data eraser as defined in claim 1,
having a plurality of coils wound around discrete parts of the outer periphery of the receptacle,
being adapted to sequentially generate an attenuating alternating magnetic field within the receptacle corresponding to the parts around which the coils are wound by sequentially applying a voltage applied from the power supply circuit to each of the coils.

7. The magnetic data eraser as defined in claim 1,
wherein the electric coil is a single coil wound around the outer periphery of the receptacle and is adapted to generate a magnetic field having a maximum field strength within a range of 199000 A/m to 279000 A/m.

8. The magnetic data eraser as defined in claim 1,
wherein at least one coil is wound around the outer periphery of the receptacle, and
wherein the receptacle is adapted to accommodate a computer body or a magnetic recording medium of large size,
one of the at least one coil is adapted to generate a magnetic field having a maximum field strength within a range of 358000 A/m to 438000 A/m.

9. The magnetic data eraser as defined in claim 1,
wherein the power supply circuit has a polarity reversing switch for reversal of voltage polarity applied to the coil.

10. A magnetic data eraser comprising:
a capacitor to which a predetermined DC voltage is applicable;
an electric coil for generating a magnetic field and connected to the capacitor in parallel; and
a switching device interposed between the capacitor and the coil,
being adapted to erase magnetic data by means of a magnetic field generated by the coil by controlling the switching device to discharge an electrical charge charged in the capacitor,
wherein the coil has an inductance and an internal resistance and the capacitor has an applied voltage, each being set at a predetermined value so that the discharge of the capacitor into the coil generates a rebound phenomenon at least once, whereby a direction of the magnetic field is reversed by a reversed electrical current flowing in the coil with a change in polarity of transient voltage.

11. The magnetic data eraser as defined in claim 1,
wherein the coil has an inductance of 100 H or more but not more than 200 Hand an internal resistance of 2.5 Ω or more but not more than 5 Ω, and
wherein the capacitor has a capacity of 4700 µF or more but not more than 9400 µF.

12. The magnetic data eraser as defined in claim 1 further comprising:
a box-shaped casing made of a magnetic material and adapted to accommodate the coil therewithin.

13. The magnetic data eraser as defined in claim 1,
wherein the coil has a wire diameter of 1.2 mm or more.

14. A method for erasing recorded magnetic data comprising step of applying an attenuating alternating magnetic field to a computer body incorporating a magnetic recording medium so that the magnetic field surrounds the computer body, with the peak value of magnetic flux density of the magnetic field reducing as time passes, so as to degauss the magnetic recording medium.

15. A method for erasing magnetic data comprising:
providing a capacitor to which a predetermined DC voltage is applicable;
providing an electric coil for generating a magnetic field;
connecting the capacitor with the coil in parallel;
interposing a switching device between the capacitor and the coil; and
controlling the switching device so as to discharge an electrical charge charged in the capacitor into the coil for generating a magnetic field,
wherein the discharge of the capacitor into the coil generates a rebound phenomenon at least once, whereby a direction of the magnetic field is reversed by a reversed electrical current flowing in the coil with a change in polarity of transient voltage.
